# EUROPÄISCHE PATENTANMELDUNG

(11) **EP 0 632 181 A1**
(43) Veröffentlichungstag der Anmeldung: **04.01.1995**
(21) Anmeldenummer: 94110205.5
(22) Anmeldetag: 30.06.1994
(51) Int. Cl.: E05F 15/12, H02K 7/06

(54) **Schubmotor mit Dämpfungskäfig**

(30) Priorität: 02.07.1993 DE 4322133
(71) Anmelder: W. HAUTAU GmbH, D-31691 Helpsen (DE)
(72) Erfinder: Lahmann, Ernst, D-31715 Meerbeck (DE)
(74) Vertreter: Leonhard, Frank Reimund, Dipl.-Ing.

(57) **Zusammenfassung**

Das technische Gebiet der Erfindung sind die Schubstangen-Stellantriebe. Sie werden verwendet zum Aus- bzw. Einklappen oder zum Verstellen von Flügeln, insbesondere den Flügeln von Oberlichtöffnern. Mit der Erfindung wird vorgeschlagen, einen kompakten Dämpferkäfig (20) vorzusehen, mit dem eine Zug-/Schubhülse (4) linearbewegbar ist. Diese Linearbewegung ist abhängig von einer Drehbewegung einer Spindelstange (3), die von einem Motor (1) drehangetrieben wird. Der Motor (1) ist nahe dem einen Ende in einem Zylindergehäuse (10) **fest angeordnet**. Der Dämpferkäfig (20) kann so gestaltet sein, daß eine bidirektional wirkende Federeinrichtung (21a, 21b; 21; 23) vorgesehen ist, die die allein linear bewegliche Mutter (22) federnd lagert. Es werden zwei Alternativen dafür aufgezeigt, zum einen ein elastischer Ringpuffer (23), zum anderen zwei Flachfedern (21a, 21b). Damit wird erreicht, daß der empfindlichste Teil eines Schubstangen-Stellantriebes - der Motor - fest und axial unverrückbar in dem Gehäuse fixiert bleibt. Sowohl er - als auch das motorseitige Lager der Spindelstange - sind einfacher und präziser auszurichten und zu fertigen und haben eine längere Lebensdauer. Wird vereinfacht gefertigt, sinkt auch der Preis.

## Beschreibung

Die Erfindung betrifft einen Schubstangen-Stellantrieb (Schubmotor) zum Aus- bzw. Einklappen oder zum Verstellen von Fensterflügeln, Dachluken, Oberlichtöffnern und sonstigen Abdeckungen von verschließbaren Öffnungen.

Solche Schubstangen-Stellantriebe werden oft an solchen Stellen angeordnet, wo ein Gestänge nicht mehr hinreichend genau oder überhaupt nicht mehr arbeiten kann. Dann wird die Energie zum Öffnen und Schließen der Abdeckung einem Spannungsnetz entnommen, sei dies eine Notstromversorgung oder das 220V-Netz. Geöffnet und geschlossen werden die Abdeckungen (im folgenden: Flügel) durch Einschalten des Stromes. Dann setzt sich ein Motor rotierend in Bewegung, der eine Spindelstange drehantreibt, die eine längsbewegliche Spindelmutter herausschiebt oder hereinholt. Mit der Spindelmutter wird eine Hülse bewegt, die an ihrem Vorderende eine Anbringungsvorrichtung, meist eine Öse, aufweist. Diese Öse wird kräftemäßig vorteilhaft an dem Flügel befestigt und erlaubt sein Ausklappen, sein Einklappen und seine Verstellung, d.h. die Vorgabe einer bestimmten Öffnungsstellung mit geringstmöglichem Kraftaufwand.

Probleme bereiten bei den erwähnten elektrischen Schubstangen-Stellantrieben in der Regel die Lagerungen, da die Endstellungen der aus- und einfahrbaren Hülse oft ruckartig (abrupt) erreicht werden. Es kann dabei sein, daß die Endstellungen der Flügel die Ruckartigkeit des Abstoppens der Drehbewegung bewirken; es kann aber auch sein, daß die Spindelmutter in ihre jeweiligen Endlagen kommt und dort mechanisch festgeklemmt wird. Dadurch blockiert der Motor augenblicklich, die Getriebe und sonstige Lager, mit denen die Spindelstange drehbar gelagert ist, werden übermäßig beansprucht.

Deshalb ist bereits vorgeschlagen worden, eine federnde Lagerung vorzusehen, die eine Dämpfung auf die Schubstange hat. Eine solche Endlagen-Dämpfung ist später weiterentwickelt worden zu einer Dämpfung, die an beliebiger Stelle des Arbeitshubes wirksam ist. Sowohl das abrupte Blockieren der Schubstange bei nur halb ausgefahrener Schubstange als auch die Endlagen werden mit diesen Vorschlägen im Stand der Technik sicher beherrscht.

Zwei mechanische Gestaltungen, wie eine Dämpfung an beliebiger Stelle des Arbeitshubes erreicht werden kann, sind Gegenstand der Offenbarungen der P 32 16 187.5 und der P 35 10 445.7.

Die Erstgenannte arbeitet mit einem **Schneckenrad**, das von einer motorisch angetriebenen Schneckenwelle gedreht wird. Das Schneckenrad ist in einem Lagerschlitten drehbar gelagert, welcher Lagerschlitten beidseitig durch Druckfedern abgestützt ist und eine Hin- und Herbewegung des Schneckenrades erlaubt. Das Schneckenrad greift an der anderen Seite dann in eine achsparallele Zahstange ein, mit der eine Linearbewegung erzielt wird. Diese Linearbewegung wirkt nur über die federnde Lagerung des Lagerschlittens auf den Motor zurück, so daß eine abrupte Abbremsung oder Blockierung der Zahnstange - des Stellhubes - den Motor und die Lager nicht schädigt.

Der andere Vorschlag des Standes der Technik geht dahin, die **Lagerung des Kugellagers**, welches die Drehung der Spindelstange erlaubt, in beide Richtungen federnd auszugestalten. Dies wird über Tellerfederpakete erreicht, die über Stützringe **fest** am Zylindergehäuse angeordnet sind. Die beiden Tellerfedern sind auf gegenüberliegenden Seiten des Kugellagers angeordnet, ebenso ist auf jeder Seite des Kugellagers einer der erwähnten Stützringe vorgesehen. Die Stützringe sind stationär (ortsfest) angeordnet, während sich das Kugellager in beide Richtungen gegen die Federkraft der Tellerfedern verschieben kann. Daraus ergibt sich auch eine entsprechende Verschiebung des Motors, der die Spindelstange antreibt. Auch er ist demnach gleitend - oder zumindest längsverschieblich - in der Zylinderhülse (Gehäuse) gelagert.

Beide Vorschläge des Standes der Technik arbeiten zwar anfänglich zufriedenstellend, werden jedoch bei längerer Betriebsdauer zunehmend störbehafteter. Dies betrifft zum einen die Instabilität, die bei weit hinten (nahe beim Motor) federnd gelagerter Spindelstange entsteht, wenn die Hülse vollständig ausgefahren ist. Die Probleme betreffen zum anderen auch die Wartung und Schmierung der Kugellager, die dann erschwert wird, wenn diese Kugellager in einer komplexen Geometrie federnd zwischen zwei ortsfesten in der Hülse gehalterten Stützringen gelagert sind. Schließlich liegt ein Problem des Standes der Technik darin, den Antriebsmotor verschlieblich zu lagern, welche Lager störanfällig sind.

Dem möchte die Erfindung abhelfen. Sie sieht daher ihre (vordringliche) Aufgabe darin, das Herz des Antriebes - den Motor - besser zu lagern. **Zur Lösung** dieser Aufgabe schlägt die Erfindung die technische Lehre des Anspruches 1 vor. Sie wird konkretisierend ausgestaltet durch die technischen Lehren der abhängigen Ansprüche.

Um den empfindlichen Teil des Schubstangen-Stellantriebes - den Motor - besser zu lagern, entfernt sich die Erfindung von den patentierten Verfahren des Standes der Technik. Sie löst sich davon, das Schubstangen-Ende, das dem Elektromotor nahe ist, federnd zu lagern oder durch eine federnd gelagerte schneckenrad-Lagerschlitten-Anordnung anzutreiben. Sie geht vielmehr den Weg, einen **linearbeweglichen Dämpferkäfig** vorzuschlagen, welcher innerhalb oder außerhalb des Zylindergehäuses linearbewegbar ist, welche Bewegung von der Drehbewegung der Spindelstange gesteuert wird. Bei dem Linearbewegen des Dämpferkäfigs wird auch die Zug-/Schubhülse - ZS-Hülse - linearbewegt, also ein- und ausgefahren.

Der Dämpferkäfig ist kompakt ausgebildet und kann entweder allein innerhalb des Zylindergehäuses linear gleitend bewegbar sein (Anspruch 3) oder so angeordnet sein, daß er außerhalb des Zylindergehäuses linearbeweglich ist (Anspruch 10); dazu ist er entweder am vorderen oder am rückwärtigen Ende der ZS-Hülse angeordnet. Er ist also ein Element des kompakten Stellantriebs.

Ist er außerhalb des Zylindergehäuses bewegbar, so kann er unmittelbar an der Anbringvorrichtung (meist hat diese eine Öse) vorgesehen sein, so daß er die entstehenden Blockierkräfte bereits abfängt, bevor sie in die Spindelstange eingeleitet werden (Ansprüche 14, 15).

Der Motor selbst wird gemeinsam mit dem motorseitigen Ende der Spindelstange in der Spindelstangenachse fest und daher in Längs- und Radialrichtung unverrückbar gehaltert. Lagerungs-Problematiken entfallen. Der Motor kann in dem Zylindergehäuse festgeschraubt sein; dies ist aber nur ein Beispiel für die "feste Anordnung" des Motors nahe eines Endes des Zylindergehäuses (Anspruch 1, Merkmalsgruppe b).

Ist der Dämpferkäfig nur innerhalb des Zylindergehäuses linearbeweglich, so kann er eine bidirektional wirkende Doppel-Federeinrichtung aufweisen. Zwischen den Elementen dieser Federeinrichtung ist eine linearbewegliche Mutter - Spindelmutter - federnd gelagert (Anspruch 4). Ist der Dämpferkäfig außerhalb des Zylindergehäuses linearverschiebbar, so ist die Spindelmutter mit der ZS-Hülse an ihrem inneren Ende direkt verbunden (Anspruch 11). Der Dämpferkäfig findet sich dann im Zuge der ZS-Hülse, was die Hülse zweiteilen kann (Anspruch 13, erste Alternative) oder er befindet sich am Vorderende der ZS-Hülse, wo über ihn die Anbringungsvorrichtung gelagert wird (Anspruch 13, zweite Alternative, Anspruch 14).

Um einen besseren Vortrieb für die ZS-Hülse zu erhalten, kann die Spindelmutter in einem Gleitgehäuse gehaltert sein, das an den Innenwänden des Zylindergehäuses längsverschieblich gleitend gelagert ist (Anspruch 12).

In allen Fällen wird neben der genaueren Fixierung des motornahen Lagers auch eine Verbesserung der Stabilität der ausgefahrenen ZS-Hülse erreicht. Das hat seine Ursache darin, daß "die Dämpfung mitfährt" und zum Stellantrieb gehört. Sie wird mit der Ausschubbewegung der Hülse auch nach weiter vorne verlagert und erlaubt es daher, die eingeleiteten Kräfte genauer abzufedern, ohne ein Verkanten zu bewirken oder eine Unsymmetrie zu erhalten.

Vorteilhaft ist hierbei die Anordnung des Dämpferkäfigs unmittelbar an der (vorderseitigen) Anbringvorrichtung, bei welcher Lösung die eingeleiteten ruckartigen Blockierkräfte noch vor Eingang in die Spindelstange federnd abgefangen werden (Anspruch 14). Vorteilhaft ist aber auch die Anbringung am rückwärtigen Ende der ZS-Hülse (in dem Zylindergehäuse), welche Lösung besonders kompakt und einbaufreundlich ist.

Ist der Dämpferkäfig nur innerhalb des Zylindergehäuses verschieblich, so kann er in Spindelstangen-Achsrichtung eine größere Abmessung haben, als die Spindelmutter (Anspruch 5). Sie befindet sich innerhalb des Dämpferkäfigs, eingebettet von beidseitig wirkenden Tellerfedern, die sich an den Innenwänden der Stirnflächen des Dämpferkäfigs abstützen (Anspruch 4). Durch die federnde Lagerung der Spindelmutter kann der Dämpferkäfig außenseitig - mit der Außenseite einer seiner Stirnflächen - mit der ZS-Hülse verbunden sein; in beiden Stirnflächen ist eine Durchgangsöffnung vorgesehen, durch welche die Spindelstange hindurchtritt (Anspruch 6). Der Dämpferkäfig ist also kompakt, muß aber nicht vollständig geschlossen sein. Andere Öffnungen können vorgesehen sein, bis hin zu einem Rahmengestell.

Mit der Erfindung wird auch vorgeschlagen, die erwähnte Spindelmutter entweder radial oder axial an dem Dämpferkäfig zu lagern (Anspruch 7, Anspruch 8). Die radiale Variante benutzt einen Ringpuffer, der sich an der Innenwand der Zylinderwand des Dämpferkäfigs abstützt (Anspruch 7). Die axiale Variante verwendet die erwähnten Tellerfedern, die sich an den Innenwänden der stirnseitigen Enden des Dämpferkäfigs abstützen (Anspruch 8). In beiden Gestaltungen der radialen Ringpuffer-Variante und der axialen Tellerfeder-Variante hat der Dämpferkäfig in Spindelstangen-Richtung eine gröpßere Abmessung, als die Spindelmutter, um deren Ausgleichsbewegung zuzulassen.

Erkennbar ist, daß der Dämpferkäfig in Spindelstangen-Richtung dann enger an die Spindelmutter angepaßt sein kann, wenn die radiale Ringpuffer-Federung verwendet wird. Dann sind die Tellerfedern entbehrlich und der Raum zwischen Spindelmutter und Stirnseiten des Dämpferkäfigs muß nur der Ausgleichsbewegung der Spindelmutter bei ruckartiger Krafteinleitung in die ZS-Hülse Raum geben.

Als weiterer Vorteil der erfindungsgemäßen Lehre sei angesprochen, daß die leichtere Zugänglichkeit des Spindelstangen-Lagers auch dazu führt, daß preiswerterer Lager eingesetzt werden können. Beispielsweise Gleitlager, die einer häufigeren Schmierung bedürfen als die üblichen selbstschmierenden "Dauerlager". Nachdem aber der Motor mit Lager der Spindelstange ortsfest und leichter zugänglich ist, da sie nicht zwischen Tellerfederpaketen (vgl. P 35 10 445.7) federnd verklemmt und axial beweglich sind, kann das Lager einfacher und genauer geschmiert werden. Ein weiterer Vorteil liegt in der einfacheren Befestigung des Motors, der nicht mehr längsverschieblich gelagert sein muß. Dies kommt auch einer Geräuschdämpfung zugute, da der Motor über Gummipuffer fest an dem Zylindergehäuse angebracht werden kann. Auch kann hierdurch eine Verbesserung der Kraftübertragung erreicht werden, ein Spiel, das eine längsverschiebliche Lagerung des Motors in der Regel aufwirft, wird vermieden.

Ausführungs**beispiele** sollen das Verständnis der Erfindung vertiefen.

**Figur 1** ist ein teilweiser Schnitt in Längsrichtung durch einen Spindelstangen-Stellantrieb als Ausführungsbeispiel der Erfindung.

**Figur 2** ist eine alternative federnde Lagerung der Spindelmutter 22, namentlich mit einem Ringpuffer 23 am Dämpferkäfig 20.

**Figur 3** ist eine ähnliche Variante der radialen Ringpuffer-Lagerung, bei der der Dämpferkäfig 20 einseitig offen ist.

**Figur 4** und **Figur 5** sind Ausführungsbeispiele für einen Dämpferkäfig 20, der unmittelbar an der Anbringungsöse 5 - dem vorderseitigen Ende des Stellantriebes - angeordnet ist.

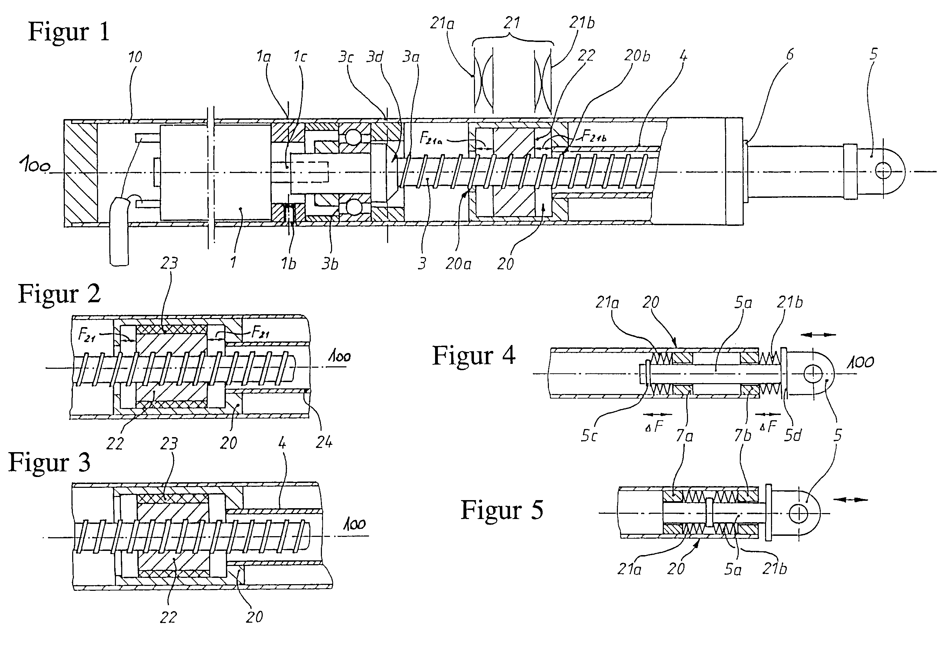

**Figur 1** veranschaulicht einen Schubmotor, der teilweise in Längsrichtung geschnitten dargestellt ist. Eine langgestreckte zylindrische Hülse 10 ist als Gehäuse für einen Elektromotor 1 vorgesehen. Er ist im hinteren Teil des Gehäuses 10 fest angeordnet, wozu zwei oder mehrere gegenüberliegende Schrauben 1a, 1b dienen. Der Antriebsschaft 1c des Motors 1 wird mit einer Spindel 3 fest verbunden, beispielsweise durch Formschluß, um die Spindel 3 drehantreibbar zu gestalten. Das hintere Ende der Spindel 3 ist zylindrisch ausgestaltet und über ein Kugellager, ein Wälzlager oder ein sonstiges Gleitlager 3b drehbar an der Innenwandung des zylindrischen Gehäuses 10 angeordnet. Zusätzlich kann eine topfähnlich Haltevorrichtung 3c vorgesehen werden, deren Bodenbereich einen runden Durchbruch 3d aufweist, durch welchen die Spindel 3 hindurchragt. Der verbleibende Kreisring des Halters 3c sichert das Kugellager axial unverrückbar. Auf diesen Weise wird sowohl der Motor 1 als auch der Außenring des Kugellagers 3b axial und radial unverrückbar an dem zylindrischen Gehäuse 10 des Spindelstangen-Stellantriebes gehaltert. Sowohl Genauigkeit der axialen Verbindung zwischen Motor 1 und Spindelstange 3 liegt hierin begründet, als auch die leichte Zugänglichkeit zu den Lagerstellen des Lagers 3b findet ihre Ursache in der genauen und festen Positionierung im Gehäuse 10 des Spindelstangen-Antriebes.

Auf der Spindelstange 3 ist ein Gewinde 3a, dessen Steigung die Geschwindigkeit einer Spindelmutter 22 bestimmt, wenn der Motor 1 eine feste Drehzahl hat. Mit dieser Steigung wird diejenige Kraft abgestimmt, die der Motor mit seiner Spindelstange 3 über die Spindelmutter 22 auf eine Schubhülse 4 übertragen kann.

Die Schubhülse 4 umgibt die Zylinderstange und trägt an ihrem unteren Ende eine Kasten- oder Topf-Anordnung 20, in der die Spindelmutter 22 gelagert ist. Die Kasten-Anordnung 20 dämpft dabei sowohl die ruckartigen Kräfte, die über die Schubhülse 4 auf die Spindel 3 wirken, als auch die ruckartigen Anfahrkräfte des Motors 1, wenn die Spindel 3 sich bei stehender Hülse 4 ruckartig zu drehen beginnt.

Am vorderen Ende der Zug- bzw. Schubhülse 4, die meist kreisförmigen Querschnitt aufweist, ist eine Anbringungsvorrichtung 5 gezeigt, die einen Schaft 5a hat, der im vorderen Ende der Hülse entweder fest oder federnd - vgl. **Figur 4** oder **Figur 5** - angeordnet ist. Mit dieser Anbringungsöse wird der Flügel, den es zu öffnen oder zu verstellen gilt, an dem Schubstangen-Antrieb befestigt. Das andere Ende - das motorseitige Ende - wird oft auch über eine Öse schwenkbar gelagert, so daß der Spindelstangen-Antrieb eine veränderliche Winkellage während des Verstellens der Flügel einnehmen kann. Ist der Schubstangen-Antrieb dagegen mit seinem zylindrischen Gehäuse 10 fest - beispielsweise durch Muffen - an einer Wand befestigt, so existiert keine Schwenkbewegung und die ZS-Hülse 4 bewegt die Anbringungsvorrichtung 5 nur in einer linearen Richtung.

Am Vorderende des Schub-Stellantriebes ist ein Gleitlager 6 vorgesehen, es kann eine einfache Zylinderbüchse sein.

Im Dämpferkäfig 20, der eine kastenförmige oder topfförmige Gestalt hat, die etwas größer ist in axialer Erstreckung, als die Spindelmutter 22, sind Federeinrichtungen angeordnet. Diese können zum einen aus gegensinnig wirkenden Tellerfedern 21a, 21b gestaltet sein, die zwischen den jeweiligen stirnseitigen Innenseiten des Dämpferkäfigs 20 und der zwischen ihnen liegenden Spindelmutter 22 ihre Kräfte aufbringen. Alternativ kann der Dämpferkäfig 20 mit einer radialen Puffereinrichtung 23 versehen sein, welche die Spindelmutter 22 radial federnd (elastisch) am Käfig 20 haltert, um so eine axiale Verschiebung von Spindelmutter 22 und Dämpferkäfig 20 unter elastischem Auslenken des Puffers zu ermöglichen; dies veranschaulicht **Figur 2**.

Der Dämpferkäfig 20 kann auch einseitig offen gestaltet sein, wie die **Figur 3** veranschaulicht. Dabei wird die Ringpuffer-Lagerung eingesetzt, bei der die Spindelmutter 22 wie in Figur 2 dargestellt gelagert ist. Es können kleine nach innen reichende Ansätze vorgesehen sein, um der Puffereinrichtung 23 einen genügenden Halt zu geben.

In **Figur 4** ist ein weiteres Ausführungsbeispiel im Schnitt dargestellt, bei dem der Dämpferkäfig 20 frontseitig angeordnet ist. Er ist in der Hülse 4 integriert, und zwar über zwei Ringscheiben 7a, 7b, die je eine Öffnung haben und beabstandet im Vorderende der Zug-/Schubhülse 4 angeordnet sind. Eine Öse ist vorderseitig am Schaft 5a angeordnet, die Befestigungszwecken dient. Kurz unterhalb der Öse ist eine scheibenförmige Rückhalterung 5d angeordnet, die eine Feder 21b einseitig haltert, welche Feder an dem Vorderende der vorderen Einsatzscheibe 7b lagert. Spiegelbildlich ist in der Zug-/Schubhülse 4 eine weitere Feder 21a zwischen der zweiten Einsatzscheibe 7b und einem Gegenhalter 5c eingespannt. So kann sich die Öse 5 federnd (elastisch) in bidirektionalen Richtungen um die Ruhelage bewegen.

Das Ausführungsbeispiel gemäß **Figur 4** kann auch so gestaltet werden, wie **Figur 5** zeigt, und zwar indem eine Zwischenhalterung im Zwischenraum zwischen den beiden Einsatzscheiben 7a und 7b an dem Schaft 5a vorgesehen wird und je eine Feder zwischen dieser Zwischenhalterung und den beiden Einsatzscheiben 7a und 7b lagert.

Aus der Beschreibung des kompakten Dämpferkäfigs 20 ist ersichtlich, daß dieser - abhängig von dem Querschnitt des Gehäuses 10 des Schubstangen-Antriebes - seine Formgebung erhält. Ist das Gehäuse 10 des Motors zylindrisch, so wird der Dämpferkäfig eine zylindrisch Außenabmessung aufweisen (Topfform).

Der Dämpferkäfig ist kompakt ausgebildet, zusammen mit der ZS-Hülse verschiebbar und enthält das elastische Spiel, das zur Vermeidung rückwärtiger Stöße vom angetriebenen/bewegten Element (Fenster) zum Motor gewünscht wird. Der Käfig ist eine kompakte Einheit und zum Stellantrieb gehörig. Die Kräfte am Dämpferkäfig greifen im wesentlichen nur in Achsrichtung 100 an, seitliche Kräfte werden durch die Gleitführung vermieden.

Besondere Eignung kommt dem Beschlagmotor für das Aus- und Einklappen von Oberlichtöffner-Flügeln zu.

Das technische Gebiet der Erfindung sind die Schubstangen-Stellantriebe. Sie werden verwendet zum Aus- bzw. Einklappen oder zum Verstellen von Flügeln, insbesondere den Flügeln von Oberlichtöffnern. Mit der Erfindung wird vorgeschlagen, einen kompakten Dämpferkäfig (20) vorzusehen, mit dem eine Zug-/Schubhülse (4) linearbewegbar ist. Diese Linearbewegung ist abhängig von einer Drehbewegung einer Spindelstange (3), die von einem Motor (1) drehangetrieben wird. Der Motor (1) ist nahe dem einen Ende in einem Zylindergehäuse (10) **fest angeordnet**. Der Dämpferkäfig (20) kann so gestaltet sein, daß eine bidirektional wirkende Federeinrichtung (21a, 21b; 21; 23) vorgesehen ist, die die allein linear bewegliche Mutter (22) federnd lagert. Es werden zwei Alternativen dafür aufgezeigt, zum einen ein elastischer Ringpuffer (23), zum anderen zwei Flachfedern (21a, 21b). Damit wird erreicht, daß der empfindlichste Teil eines Schubstangen-Stellantriebes - der Motor - fest und axial unverrückbar in dem Gehäuse fixiert bleibt. Sowohl er - als auch das motorseitige Lager der Spindelstange - sind einfacher und präziser auszurichten und zu fertigen und haben eine längere Lebensdauer. Wird vereinfacht gefertigt, sinkt auch der Preis.

## Patentansprüche

1. Schubstangen-Stellantrieb zum Aus- bzw. Einklappen oder Verstellen von Flügeln, insbesondere Flügeln von Oberlichtöffnern, bei dem
(a) eine mit einer Spindel (3a) versehene Spindelstange (3) von einem Motor (1) drehantreibbar ist, der nahe eines Endes in einem Zylindergehäuse (10) fest angeordnet ist;
(b) eine Zug-/Schubhülse (4) mit einem (nur) linear beweglichen Dämpferkäfig (20) linearbewegbar ist, abhängig von der Drehbewegung der Spindelstange (3).

2. Schubstangen-Stellantrieb nach Anspruch 1, bei dem die Drehzahl der Getriebestange (3) diejenige des Motors (1) ist, der in Achsrichtung (100) der Spindelstange (3) am Zylindergehäuse (10) angeordnet ist.

3. Schubstangen-Stellantrieb nach einem der vorhergehenden Ansprüche, bei dem
der kompakte Dämpferkäfig (20) innerhalb des Zylindergehäuses (10) linear gleitend verschiebbar ist.

4. Schubstangen-Stellantrieb nach einem der vorhergehenden Ansprüche, bei dem
der Dämpferkäfig (20) eine bidirektional wirkende Federeinrichtung (21a, 21b; 21; 23) aufweist, die eine allein linearbewegliche Mutter (22) federnd lagert.

5. Schubstangen-Stellantrieb nach Anspruch 4, bei dem der Dämpferkäfig (20) - in Schub- oder Zugrichtung gesehen - eine größere Ausdehnung hat, als die Spindelmutter (22).

6. Schubstangen-Stellantrieb nach einem der vorhergehenden Ansprüche, bei dem
der Dämpferkäfig (20) fest mit der Zug-/Schubhülse (4) verbunden ist und für die Spindelstange (3) zwei gegenüberliegende axiale Öffnungen (20a, 20b) aufweist.

7. Schubstangen-Stellantrieb nach einem der Ansprüche 4 bis 6, bei dem
die linearbewegliche Mutter (22) im Dämpferkäfig (20) von einem elastischen Ringpuffer (23) radial gelagert ist.

8. Schubstangen-Stellantrieb nach einem der Ansprüche 4 bis 6, bei dem
die Mutter (22) axial von zwei Flachfedern (21a, 21b), insbesondere Tellerfedern, in dem Dämpferkäfig (20) bidirektional elastisch gelagert ist.

9. Schubstangen-Stellantrieb nach einem der vorhergehenden Ansprüche, bei dem
der Innendurchmesser der Zug-/Schubhülse (4) geringfügig größer ist, als der Außendurchmesser von Spindelstange (3) mit erhabener Spindel (3a).

10. Schubstangen-Stellantrieb nach Anspruch 1 oder 2, bei dem der Dämpferkäfig (20) außerhalb des Zylindergehäuses (10) linearbeweglich ist.

11. Schubstangen-Stellantrieb nach Anspruch 10, bei dem die Zug-/Schubhülse (4) - ZS-Hülse (4) - an ihrem motornahen Ende mit einer Spindelmutter (22) fest verbunden ist.

12. Schubstangen-Stellantrieb nach Anspruch 11, bei dem die Spindelmutter (22) in einem Gleitgehäuse gehalten ist, das im Zylindergehäuse (10) längsverschieblich gleitend, aber verdrehfest gelagert ist.

13. Stellantrieb nach einem der erwähnten Ansprüche, bei dem
(a) die ZS-Hülse (4) zweigeteilt ist und zwischen beiden Hülsenstücken eine bidirektional wirkende Federeinrichtung, insbesondere zwei gegensinnig wirkende Tellerfedern, angeordnet ist;
(b) der Dämpferkäfig am vorderen oder rückwärtigen Ende der ZS-Hülse angeordnet ist.

14. Schubstangen-Stellantrieb nach einem der Ansprüche 10 bis 13, bei dem
die Anbringvorrichtung (5, 5a, 5c, 5d) federnd am Vorderende der ZS-Hülse (4) angeordnet ist und die Federwirkung bidirektional ist (21a, 21b).

15. Schubstangen-Stellantrieb nach Anspruch 14, bei dem
(a) zwei in der ZS-Hülse (4) angeordnete Führungsstücke (7a, 7b) so beabstandet sind, daß sie einen Schaft (5a) der Anbringungsvorrichtung (5) stabil - ohne zu verkanten - verschiebbar lagern;
(b) je eine Feder (21a; 21b) an je einem Führungsstück (7a; 7b) und je einem Kopplungsorgan (5c; 5d) der Anbringungsvorrichtung (5) mit entgegengesetzten Federkräften angreift.
